# EUROPÄISCHE PATENTSCHRIFT

(11) **EP 3 019 320 B1**
(45) Veröffentlichungstag und Bekanntmachung des Hinweises auf die Patenterteilung: **06.01.2021**
(21) Anmeldenummer: 14750322.1
(22) Anmeldetag: 11.07.2014
(51) Int. Cl.: B29C 45/14, B62D 25/00, B60J 5/00

(54) **VERFAHREN ZUR HERSTELLUNG EINES STRUKTURBAUTEILS FÜR KRAFTFAHRZEUGE AUS EINEM ORGANOBLECH**
METHOD FOR PRODUCING A STRUCTURAL COMPONENT FOR MOTOR VEHICLES FROM AN ORGANO-SHEET
PROCÉDÉ DE FABRICATION D'UNE PIÈCE STRUCTURALE POUR VÉHICULES À MOTEUR EN COMPOSITE À MATRICE THERMOPLASTIQUE ET À FIBRES LONGUES

(30) Priorität: 12.07.2013 DE 102013213711
(43) Veröffentlichungstag der Anmeldung: 18.05.2016
(60) Teilanmeldung: 16150277.8
(73) Patentinhaber: Brose Fahrzeugteile SE & Co. Kommanditgesellschaft, Bamberg, 96052 Bamberg (DE)
(72) Erfinder: THIENEL, Michael, 95340 Thurnau (DE); KRIESE, Olaf, 96450 Coburg (DE); SCHULTZ, Markus, 90425 Nürnberg (DE); STAMMBERGER, Werner, 96271 Grub am Forst (DE); NERB, Stephan, 97475 Zeil am Main (DE)
(74) Vertreter: Maikowski & Ninnemann Patentanwälte Partnerschaft mbB
(86) Internationale Anmeldenummer: PCT/EP2014/064933
(87) Internationale Veröffentlichungsnummer: WO 2015/004271

(56) Entgegenhaltungen:
- WO-A1-2006/008529
- WO-A2-2014/044648
- DE-A1-102010 053 381
- "Das Zeitalter der Verfahrens-kombination beginnt.", , 31. Oktober 2012 (2012-10-31), XP055144744, Gefunden im Internet: URL:https://www.kunststoffe.de/_storage/as set/534171/storage/master/file/5782239/dow nload/Das Zeitalter der Verfahrenskombination beginnt.pdf [gefunden am 2014-10-07]
- Carl Hanser Verlag ET AL: "Integrative Simulation von Organoblech-Hybridbauteile", , 30. September 2012 (2012-09-30), XP055144759, Gefunden im Internet: URL:https://www.kunststoffe.de/_storage/as set/534469/storage/master/file/5784263/dow nload/Integrative Simulation von Organoblech-Hybridbauteilen.pdf [gefunden am 2014-10-07]
- Carl Hanser Verlag ET AL: "Mehr Potenzial für Leichtbau", , 31. März 2012 (2012-03-31), XP055144778, Gefunden im Internet: URL:https://www.kunststoffe.de/_storage/as set/535262/storage/master/file/5959658/dow nload/Mehr Potenzial für Leichtbau.pdf [gefunden am 2014-10-07]
- Carl Hanser Verlag ET AL: "Hohlkörperverbundstrukturen im Minutentakt", , 30. März 2011 (2011-03-30), XP055169947, Gefunden im Internet: URL:https://www.kunststoffe.de/_storage/as set/536825/storage/master/file/5966470/dow nload/Hohlkörperverbundstrukturen im Minutentakt.pdf [gefunden am 2015-02-16]
- Carl Hanser Verlag ET AL: "Hybridtechnik_ Maßgeschneiderte Thermoplaste mit Layerstrukturen und Endlosfaser-Verstärkung", , 30. September 2003 (2003-09-30), XP055169953, Gefunden im Internet: URL:https://www.kunststoffe.de/kunststoffe -zeitschrift/archiv/artikel/hybridtechnik- massgeschneiderte-thermoplaste-mit-layerst rukturen-und-endlosfaser-verstaerkung-5293 53.html [gefunden am 2015-02-16]
- Carl Hanser Verlag ET AL: "Lokal verstärkte Bauteile_ Maßgeschneidert leicht", , 30. Dezember 2003 (2003-12-30), XP055169957, Gefunden im Internet: URL:https://www.kunststoffe.de/kunststoffe -zeitschrift/archiv/artikel/lokal-verstaer kte-bauteile-massgeschneidert-leicht-52903 2.html [gefunden am 2015-02-16]

## Beschreibung

Die Erfindung betrifft ein Verfahren zur Herstellung eines als Türinnenhaut, Türmodul- oder Aggregateträger einer Kraftfahrzeugtür ausgebildeten Strukturbauteils durch Warmumformung eines mehrlagig aufgebauten Organoblechs gemäß Anspruch 1.

Als Organobleche werden plattenförmige Halbzeuge aus einem endlosfaserverstärkten thermoplastischen Kunststoff bezeichnet, bei denen Endlosfasern in Form von Gelegen, Geweben oder Gestricken aus Glas-, Kevlar-, Kohle- oder Kunststofffasern in eine thermoplastische Matrix eingebettet werden. Als thermoplastischer Kunststoff für die Matrix eignet sich beispielsweise Polyamid aufgrund seiner guten Haftungseigenschaften zu den Fasern.

Unter der Bezeichnung "endlosfaserverstärkt" ist zu verstehen, dass die Länge der zur Verstärkung dienenden Fasern im Wesentlichen durch die Größe der plattenförmigen Organobleche begrenzt ist, innerhalb eines Organoblechs eine Faser aber im Wesentlichen nicht unterbrochen ist.

Organobleche können wie Metallbleche zugeschnitten und mit Durchbrüchen versehen werden, sind aber leichter als Metallbleche und weisen gleichzeitig eine hohe Flächensteifigkeit und Festigkeit auf. Bei ausreichender Erwärmung der thermoplastischen Matrix können Organobleche wie Metallbleche, jedoch unter Einsatz kleinerer Verformungskräfte, dreidimensional verformt werden. Dazu wird das Organoblech zunächst erhitzt, um die Matrix des Organoblechs aufzuschmelzen, und anschließend wird das Organoblech durch Tiefziehen umgeformt. Dadurch lassen sich Strukturbauteile für Kraftfahrzeuge, beispielsweise Türelemente wie Türmodule, Aggregateträger, Türinnenbleche und Türaußenbleche, Sitzelemente wie Sitzwanne und Rückenlehne aber auch Kotflügel, Klappen und Hauben, Stoßfänger und dergleichen in Leichtbauweise herstellen und dadurch deutliche Gewichtsreduzierungen bei gleichzeitig leichterer Bearbeitung erzielen.

Aus der DE 10 2010 001 634 A1 ist ein Verfahren zum Herstellen eines Bauteils aus einem Organoblech durch thermische Umformung des Organoblechs bekannt, bei dem zur Ausbildung von Aussparungen im Bauteil die Faseranordnung des Organoblechs aufgeweitet wird, ohne die Struktur der in die Matrix aus thermoplastischem Kunststoff eingebetteten Faseranordnung des Organoblechs zu zerstören.

Aus der DE 10 2011 111 232 A1 ist ein als Karosseriesäulenverstärkung dienendes Leichtbauteil für ein Kraftfahrzeug bekannt, bei dem mehrere Organoblechlagen mit Faserverstärkungen unterschiedlicher Orientierung sowie Durchbrüche und Durchgangslöcher vorgesehen sind, die in Größe, Form und Position des Leichtbauteils an dessen Einsatzzweck angepasst sind.

Aus der DE 20 2006 019 341 U1 ist ein Strukturbauteil aus Organoblech mit strukturversteifendem, als Formteil ausgebildetem Kunststoffeinleger bekannt, der zur stoffschlüssigen Verbindung mit thermoplastischem Verstärkungsmaterial umspritzt wird.

Aus dem Dokument "Kunststoffe 10/2012, Seiten 44-49" ("Das Zeitalter der Verfahrenskombination beginnt") ist es bekannt, ein vorkonfektioniertes Organoblech mit einem Roboter aufzunehmen, zur Warmumformung zu einer Infrarot-Heizstation zu transportieren und das heiße, biegeschlaffe Halbzeug einem Werkzeug zu übergeben, das das Organoblech mit Führungs-, Halte- und Drapierelementen ausstattet. Anschließend werden Versteifungs- und Funktionselemente an das dreidimensional drapierte Organoblech angespritzt.

Aus dem Dokument "Kunststoffe 9/2012, Seiten 102-106" ("Integrative Simulation von Organoblech-Hybridbauteilen") ist es bekannt, Organobleche aus einer Kunststoffmatrix herzustellen, die mit Endlosfasergeweben oder -gelegenen aus Glas-, Aramid- oder Karbonfasern verstärkt ist, wobei sich die Endlosfasern gestreckt mit hohem Orientierungsgrad und dadurch in größeren Mengen in die Thermoplastmatrix einbetten lassen. Sie können parallel bzw. bidirektional verlaufen oder rechtwinklig bzw. orthotrop oder balanciert zueinanderstehen. Dabei entspricht die Faserlänge der Endlosfasergewebe oder -gelege der Organoblech-Hybridbauteile der Bauteillänge, sodass der Kraftfluss zwischen Krafteinleitungspunkten über die Endlosfasern stattfindet, wodurch die mechanische Leistungsfähigkeit des Bauteils entsprechend ansteigt. Zur Fertigung eines Hybridbauteils wird das Organoblech thermoplastisch umgeformt bzw. drapiert und an ausgewählten Stellen mit Verrippungen und Funktionselementen aus kurzglasfaserverstärktem Polyamid hinterspritzt.

Aus dem Dokument "Kunststoffe 3/2012, Seiten 68-70" ("Mehr Potenzial für Leichtbau") ist es bekannt, das Leichtbaupotenzial technischer Thermoplaste wie Polyamid oder Polybutylenterephthalat (PBT) zur Gewichtseinsparung durch effektive Leichtbaukonzepte auf der Basis von hybriden Materialverbunden und faserverstärkten Composite-Konstruktionen für hochintegrierte Türen und Heckklappen, Querversteifungen für die Bodengruppe oder Trägermodule von Panoramadächern von Elektro- und Hybridfahrzeugen zu nutzen, da langfaserverstärkte Organobleche mit einer Matrix aus Polyamid gegenüber Aluminium- und Stahlblechen wegen ihrer geringeren Dichte deutlich leichter sind.

Aus dem Dokument "Kunststoffe 3/2011, Seiten 110-114" ("Hohlkörperverbundstrukturen im Minutentakt") ist ein Verfahren zur wirtschaftlichen Herstellung von leichten Faserverbundkunststoffteilen mit hoch belastbaren Voll- und Hohlprofilen bekannt, bei dem ein Rohr aus Faserverbundkunststoffen aus zwei halbkreisförmigen Organoblech-Schalen gebildet wird, wobei an den Nahtstellen die Außenschichten nicht direkt aneinanderstoßen, sondern in die flächige Grundstruktur des Bauteils übergehen. Der Hohlraum zwischen den Organoblech-Halbschalen wird mit einer thermoplastischen Innenschicht ausgekleidet oder mit einer Schaumstruktur ausgefüllt. Die Innenschicht stabilisiert die Rohrstruktur in radialer Richtung, wobei diese Stützwirkung es erlaubt, mit dünnen Organoblechen zu arbeiten, deren Steifigkeits- und Festigkeitspotenzial ausgenutzt werden kann. Hierbei werden insbesondere Organobleche mit Vorzugsorientierung sowie Organobleche mit eingebetteten Karbongeweben für höchste Steifigkeits- und Festigkeitsanforderungen genutzt. Als Matrixwerkstoffe für die Konsolidierung der Gewebematerialien kommen Polyamid und Polypropylen zur Anwendung. Dabei wird grundsätzlich zwischen Voll- und Hohlprofilen unterschieden, wobei Vollprofile aus gewebeverstärkten Decklagen und einem geschäumten Kern bestehen, in dem die Decklagen zunächst auf Schmelzetemperatur vorgewärmt werden, bevor zwischen die beiden Verstärkungslagen eine gasbeladene Schmelze mit kompatibler Matrix gespritzt wird. Zur Erzeugung von Hohlstrukturen wird Gasdruck wie bei einer konventionellen Fluidinjektionstechnik durch eine Injektionsnadel in die Struktur eingeleitet und eine Heizstation bringt die Organoblechdecklagen auf Schmelztemperatur. Im Anschluss daran wird als Zwischenprodukt ein Sandwich erzeugt, indem eine Kunststoffschmelze zwischen die beiden Verstärkungslagen gespritzt oder als Strang abgelegt wird.

Aus der DE 10 2010 053 381 A1 ist ein plattenförmiges, formstabiles Organoblech bekannt, das als imprägniertes Faser-Matrix-Halbzeug mit einem thermoplastischen Kunststoff als Matrixmaterial und darin eingebetteten Verstärkungsfasern ausgebildet ist und zum Erhalt seiner Formstabilität auch nach einer Erwärmung zur Formgebung des Organoblechs mit einer Drahtstruktur versehen wird, die aus einzelnen, in einer oder mehreren Richtungen in dem Organoblech angeordneten Drähten besteht und so ein Drahtnetz ausbildet. Die Drahtstruktur wird zwischen einzelnen Gewebelagen des Organoblechs eingelegt oder in einer oder mehreren Gewebelagen eingewebt, so dass das Organoblech beim Erwärmen nicht schlaff wird, sondern seine Formstabilität behält und in einem Werkzeug weiterverarbeitet werden kann.

Aus der WO 2006/008529 A1 ist eine Platte bekannt, die aus einem Laminatverbundmaterial gebildet ist, das einen Kern aus Thermoplast aufweist, der ein erstes Polymer in Form von Polypropylen umfasst, und Deckschichten aufweist, die einen mit langen Fasern verstärkten Thermoplast aus einem zweiten Polymer aufweisen, wobei die langen Fasern parallel zu den Oberflächen der Deckschichten angeordnet sind, und die Kernschicht auf jeder Oberfläche zumindest teilweise mit einer der Deckschichten bedeckt ist, wobei die Schichten in einem erwärmten Formwerkzeug verdichtet worden sind.

Aufgabe der vorliegenden Erfindung ist es, ein Verfahren der eingangs genannten Art anzugeben, das die Belastung des Organoblechs während eines Warmumformungsprozesses zur Herstellung eines Strukturbauteils und die strukturelle Belastung des aus dem Organoblech hergestellten Strukturbauteils minimiert und die Stabilität des Organoblechs und des aus dem Organoblech hergestellten Strukturbauteils unter Berücksichtigung struktureller Veränderungen des Organoblechs während der Warmumformung erhält.

Diese Aufgabe wird erfindungsgemäß durch ein Verfahren mit den Merkmalen des Anspruchs 1 gelöst.

Das erfindungsgemäße Verfahren ermöglicht bei hoher Oberflächensteifigkeit, Festigkeit und struktureller Belastbarkeit des Strukturbauteils große dreidimensionale Verformungen bei einer Warmumformung oder beim Tiefziehen, ohne dass infolge von Materialdehnung an stärkeren Verformungsstellen Durchgänge oder Risse auftreten, durch die Feuchtigkeit von der einen zur anderen Seite des Strukturbauteils hindurchtreten kann.

Vorzugsweise werden die äußeren Lagen des Organoblechs aus mit Karbonfasern verstärktem thermoplastischem Kunststoff mit einer Zwischenlage aus Aramid oder einer Mischung aus Aramid mit Naturfasern, insbesondere aus Holz oder Sisal, zu einem Verbund geformt.

Ein mit einem Organoblech nach dem vorgeschlagenen Verfahren hergestelltes Strukturbauteil weist einen sandwichartigen Aufbau mit äußeren Organoblechen und einem den jeweiligen Anforderungen des Strukturbauteils angepassten Kernbereich aus wenigstens einem anderen Material auf.

Vorteilhafte Ausgestaltungen eines derartigen Strukturbauteils sind durch
- mehrere den jeweiligen Anforderungen angepasste Zonen des flächenförmigen Strukturbauteils mit einem mehrlagigen, sandwichartigen Aufbau mit
   - unterschiedlichem Kernmaterial und/oder
   - unterschiedlichen Kerndicken und/oder
   - unterschiedlicher Anzahl verschiedener Zonen des flächenförmigen Strukturbauteils,
- thermisch oder akustisch gut isolierende Zonen mit geringer Druckstabilität in Verbindung mit Zonen hoher Druckfestigkeit,
- mindestens eine Zone mit hohem Widerstandsmoment,
- eine Zone hoher Zugfestigkeit und mehrerer Zonen hoher Druckbelastbarkeit gekennzeichnet.

Weitere Merkmale und damit erzielbare Vorteile der Erfindung werden anhand der nachfolgenden Beschreibung von Ausführungsbeispielen unter Bezugnahme auf die Figuren der Zeichnung verdeutlicht. Aus dieser Beschreibung und den Figuren gehen auch Merkmale der Ausführungsbeispiele hervor, die nicht in den Ansprüchen enthalten sind. Diese Merkmale können auch in anderen als den hier spezifisch offenbarten Kombinationen auftreten. Die Tatsache, dass mehrere solcher Merkmale in einem gleichen Satz oder in einer anderen Art von Textzusammenhang miteinander erwähnt sind, bedeutet nicht, dass sie nur in der spezifisch offenbarten Kombination auftreten können; stattdessen ist grundsätzlich davon auszugehen, dass von mehreren solcher Merkmale auch einzelne weggelassen oder abgewandelt werden können, sofern dies die Funktionsfähigkeit der Erfindung nicht in Frage stellt. Es zeigen:
- Fig. 1: eine schematische Darstellung einer Anlage zur Warmumformung von Organoblechen und Herstellung von Strukturbauteilen insbesondere für Kraftfahrzeugteile;
- Fig. 2: eine Draufsicht auf ein als Türmodul oder Aggregateträger einer Kraftfahrzeugtür ausgebildetes Strukturbauteil mit Aufhängestellen zur Warmumformung eines Organoblechs und Schnittstellen für eine Bajonettverbindung des Strukturbauteils;
- Fig. 3: eine Draufsicht auf ein als Türmodul oder Aggregateträger einer Kraftfahrzeugtür ausgebildetes Strukturbauteil mit an den Aufhängestellen ausgebildeten Überständen des Organoblechs;
- Fig. 4: eine schematische Darstellung eines Organoblechs für ein Türmodul oder einen Aggregateträger einer Kraftfahrzeugtür mit vorgeformten Befestigungsaufnahmen für die Warmumformung des Organoblechs;
- Fig. 5: eine Draufsicht auf ein in ein Organoblech für ein Türmodul integriertes, auf eine Belastungsrichtung ausgerichtetes Zugband;
- Fig. 6 bis 8: eine schematische Darstellung des Randbereichs eines Organoblechs mit einem Adapter zur Krafteinleitung und -verteilung eines in das Organoblech integrierten Zugbandes;
- Fig. 9 bis 12: eine schematische Darstellung eines Randbereichs eines Organoblechs mit Verstärkungsmitteln zur Verbindung eines Zugbandes mit dem Organoblech;
- Fig. 13: zeigt eine Draufsicht auf ein Organoblech mit einer Befestigungsöffnung und einem fingerförmig in Richtung des Anschlussbereichs eines Verstärkungselements aufgefächerten Adapter;
- Fig. 14 und 15: Schnitte durch das Organoblech gemäß Fig. 13 entlang den Schnittlinien A - A und B - B;
- Fig. 16 und 17: schematische Darstellung eines Organoblechs für ein Türmodul oder einen Aggregateträger mit in verschiedene Belastungsrichtungen ausgerichtetem Faserverlauf des in eine thermoplastische Matrix des Organoblechs eingelegten Gewebes bzw. Geleges;
- Fig. 18 bis 21: verschiedene Ausführungsformen von Gewebelagen zum Einlegen in eine thermoplastische Matrix für ein Türmodul oder einen Aggregateträger einer Kraftfahrzeugtür;
- Fig. 22 und 23: perspektivische Darstellungen zweier Gewebearten zur Verstärkung der thermoplastischen Matrix eines Organoblechs;
- Fig. 24: eine Draufsicht auf ein Multiaxial-Gelege mit Vernähung sich kreuzender Lagen zur Verstärkung einer thermoplastischen Matrix;
- Fig. 25 bis 28: Querschnitte durch ein Organoblech mit einem Lagenaufbau mit zusätzlichen Folienschichten zur Sicherung der Dichtheit des Organoblechs;
- Fig. 29: eine Draufsicht und einen schematischen Querschnitt durch ein Organoblech in Mehrzonen-Sandwichbauweise;
- Fig. 30 bis 35: verschiedene Varianten der Mehrzonen-Sandwichbauweise gemäß Fig. 29;
- Fig. 36: eine schematische Darstellung einer Vorrichtung zur Herstellung eines Organoblechs mit Mehrzonen-Sandwichbauweise gemäß den Fig. 29 bis 35;
- Fig. 37 bis 39: Draufsichten auf ein als Türmodul ausgebildetes Strukturbauteil mit unterschiedlichen Belastungszonen des Organoblechs zur Herstellung des Strukturbauteils.

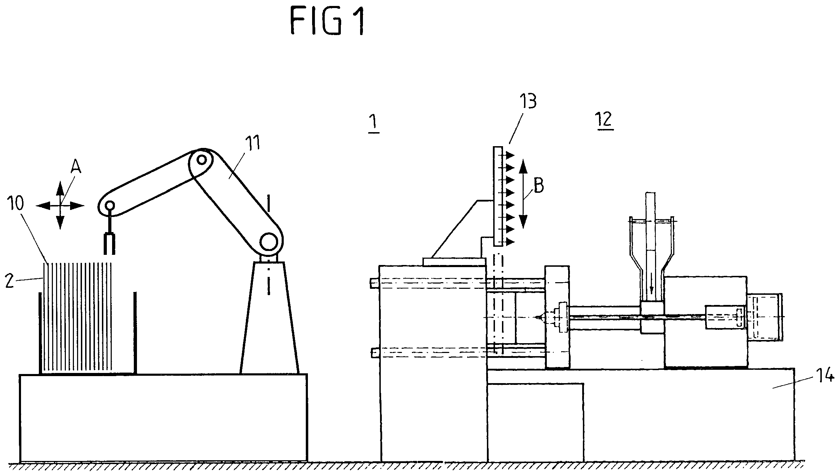

Die in Fig. 1 schematisch dargestellte Anlage 1 zur Warmumformung von Organoblechen 2 zur Herstellung von Strukturbauteilen für Kraftfahrzeuge enthält ein Magazin 10 mit darin gestapelten platten- oder tafelförmigen Organoblechen 2, deren äußere Konturen an den aus den Organoblechen 2 hergestellten Strukturbauteilen für ein Kraftfahrzeug angepasst sind. Ein benachbart zum Magazin 10 angeordneter Roboter mit einem Greifer 11 ist in Richtung der sich kreuzenden Pfeile A, d.h. senkrecht zur Ebene der Organobleche 2 sowie in der Ebene der Organobleche 2, beweglich, um die Organobleche 2 aus dem Magazin 10 zu einer Bearbeitungseinheit 12 mit einer in Richtung des Doppelpfeiles B verschiebbaren Strahlereinheit 13 und einer Spritzgießmaschine 14 zur Warmumformung und zum Anspritzen zusätzlicher Teile bzw. zum Zuspritzen von für den Bearbeitungsvorgang vorgesehener Öffnungen oder Durchbrüche zu transportieren. Die als Halbzeug angelieferten Organobleche 2 aus einer Kunststoffmatrix mit eingelagerten Endlosfasern in Form von Gelegen, Geweben oder Gestricken werden in der in Fig. 1 schematisch dargestellten Anlage 1 durch Warmumformung und ggf. durch Anspritzen von Teilen oder Zuspritzen von Öffnungen oder Durchbrüchen bearbeitet, wobei die Organobleche 2 im angelieferten Zustand bereits auf den späteren Verwendungszweck zugeschnitten, d.h. in ihrer äußeren Kontur an den späteren Verwendungszweck als Strukturbauteile für Kraftfahrzeuge wie Türelemente, Modulträger, Türinnenbleche und Türaußenbleche, Sitzelemente wie Sitzwanne und Rückenlehne, aber auch Kotflügel, Klappen und Hauben, Stoßfänger und dergleichen angepasst sind.

Zur Warmumformung und Behandlung in der Spritzgießmaschine 14 werden die Organobleche 2 mittels des Roboters mit Greifer 11 aus dem Magazin 10 herausgehoben und zu einer Aufhängung der Bearbeitungseinheit 12 transportiert. Zu diesem Zweck kann die verschiebbare Strahlereinheit 13 bezüglich des Doppelpfeiles B angehoben oder abgesenkt werden bevor die Strahlereinheit 13 zur Erwärmung des Organoblechs 2 aktiviert wird.

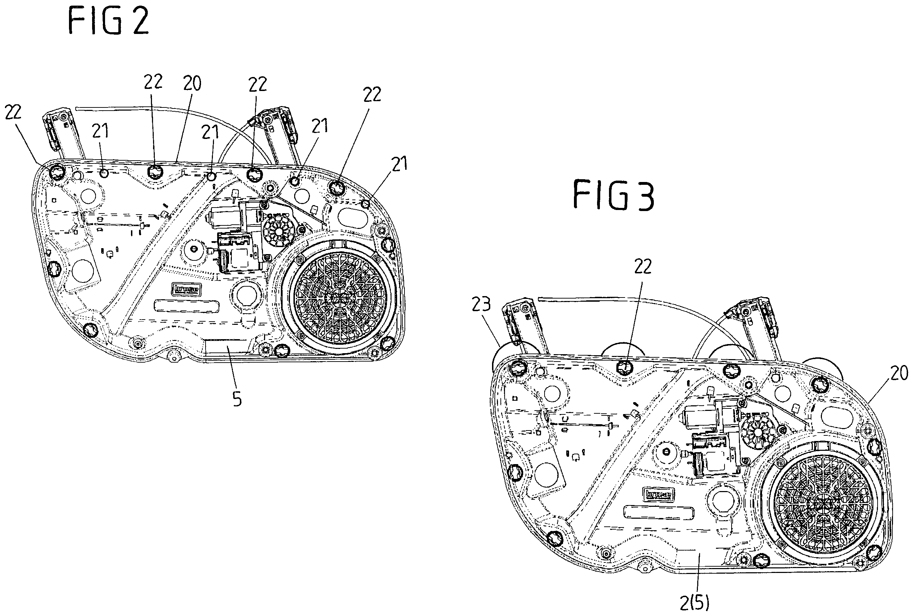

Fig. 2 zeigt eine Draufsicht auf ein Strukturbauteil eines Kraftfahrzeugs in Form eines Türmoduls oder eines Aggregateträgers 5 einer Kraftfahrzeugtür mit mehreren am Umfang des Türmoduls oder Aggregateträgers 5 verteilt angeordneten Schnittstellen oder Durchtrittsöffnungen 22 für eine Bajonettverbindung des Türmoduls oder Aggregateträgers 5 mit einem Türinnenblech der Kraftfahrzeugtür. Diese Schnittstellen oder Durchtrittsöffnungen 22 für die Bajonettverbindung können gleichzeitig so angeordnet und ausgebildet werden, dass sie als Aufhängestellen zur Aufnahme des zum Strukturbauteil 5 umgeformten Organoblechs auf Nadeln dienen. Zu diesem Zweck können im Bereich der Durchtrittsöffnungen 22 für die Bajonettverbindungen Maßnahmen zur Vermeidung eines Ausreißens der Durchtrittsöffnungen 22 bei der Warmumformung des Organoblechs 2 durch Abschottung, partiell reduzierte Strahlerintensität im Bereich der Durchtrittsöffnungen 22 sowie Kühlung im Aufhängungsbereich durch mittels eines Gebläses zugeführter Kaltluft getroffen werden.

In Ergänzung zur Anordnung von Durchtrittsöffnungen 22 für eine Bajonettverbindung des Türmoduls 5 mit einem Türinnenblech einer Kraftfahrzeugtür können Befestigungselemente mit einem mittels eines Werkzeugs betätigbaren Betätigungskopf, einem Schaft, der die als Bajonettverbindung ausgebildete Durchtrittsöffnung 22 des Türmoduls 5 und eine hierzu fluchtende Befestigungsstelle des Türinnenblechs durchgreift, und einem Befestigungskopf im Bereich des Befestigungskopfes einstückig am Rand des Türmoduls 5 angeformt, insbesondere angespritzt werden. Der Verbindungsbereich, entlang der die Befestigungselemente an ihren Befestigungsköpfen einstückig mit dem Türmodul 5 am Rand der Durchtrittsöffnungen 22 verbunden sind, ist dabei als Sollbruchbereich ausgebildet, d.h. bei einer Betätigung der Befestigungselemente an ihren Betätigungsköpfen mittels eines zugeordneten Werkzeuges werden die Befestigungselemente zunächst in axialer Richtung verschoben wobei die Verbindung zwischen den Befestigungselementen und dem Türmodul aufgebrochen wird. Bei weiterem axialem Verschieben der Befestigungselemente durchgreifen die Schäfte die Durchtrittsöffnungen 22 sowie die Befestigungsstellen des Türinnenblechs bis deren Befestigungsköpfe jenseits der Befestigungsstellen des Türinnenblechs liegen.

Nachdem die Befestigungselemente in axialer Richtung so verschoben worden sind, dass deren Befestigungsköpfe nicht mehr innerhalb der Durchtrittsöffnungen 22 des Türmoduls 5 liegen, sondern nun vielmehr von der türstrukturseitigen Oberfläche des Türmoduls 5 abstehen und dabei jenseits der Befestigungsstellen des Türinnenblechs liegen, werden die Befestigungselemente zur Herstellung des Bajonettverschlusses um 180° gedreht.

Zusätzlich oder alternativ können weitere als Lochungen ausgebildete Aufhängestellen 21 zwischen den Durchtrittsöffnungen 22 für die Bajonettverbindungen im oberen Aufhängungsbereich vorgesehen werden, die entweder als weitere Befestigungsstellen 2für Schraubverbindungen dienen oder nach der Warmumformung des Organoblechs mittels der Spritzgießmaschine 14 gemäß Fig. 1 zugespritzt werden.

Fig. 3 zeigt in einer Draufsicht auf ein als Türmodul oder Aggregateträger ausgebildetes Strukturbauteil 5 eine weitere Alternative zur Vermeidung eines Auszugs des Organoblechs 2 an dessen Aufhängestellen bei der Warmumformung des Organoblechs 2, die darin besteht, Überstände 23 an der Kontur 20 des Organoblechs 2 bzw. Strukturbauteils 5 vorzusehen, die bei der Warmumformung des Organoblechs 2 durch eine entsprechende Positionierung der Stahlereinheit 13 gemäß Fig. 1 nicht miterhitzt werden, so dass eine steife Materialerweiterung im Bereich der Aufhängestellen nach Art eines Brückenwerks geschaffen wird, das die bei der Warmumformung des Organoblechs auf die Aufhängestellen wirkenden Kräfte zu den Seiten der Aufhängestellen überträgt. Bei späterer Konfiguration des Türmoduls oder Aggregateträgers 5 können die Überstände 23 beibehalten oder vor der Weiterverarbeitung und Installation in eine Kraftfahrzeugtür weggeschnitten werden.

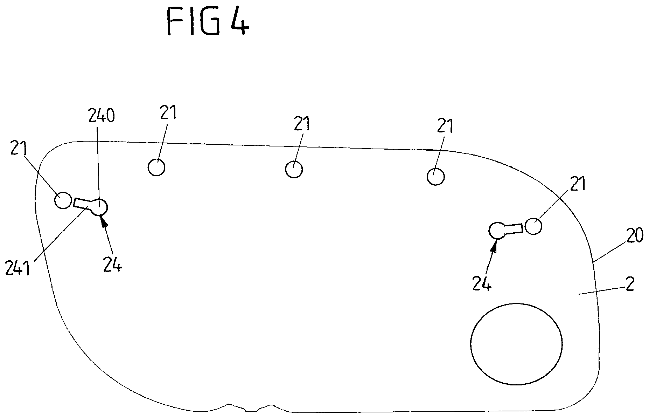

Eine weitere Maßnahme zur Vermeidung eines Ausreißens der Aufhängungsstellen eines Organoblechs und Schwächung eines Strukturbauteils im Bereich der Aufhängestellen bzw. mangelnden Maßhaltigkeit des Strukturbauteils infolge veränderter Aufhängestellen des Organoblechs während dessen Warmumformung ist schematisch in Fig. 4 dargestellt und besteht aus der Anordnung von als Schlüssellochöffnungen ausgebildeten Aufhängestellen 24 für Nadeln zur Aufnahme des Organoblechs mit Öffnungen 240 zur Verbindung mit den Nadeln und einem von den Öffnungen 240 wegweisenden Schlitz 241 zur Vorgabe einer definierten Fließ-, Gleit- und Deformationsrichtung bei der Formgebung des Organoblechs, da das in die Kunststoffmatrix eingebettete Gewebe, Gelege oder Gestricke dem Längungsbedarf an den Aufhängestellen nur unvollständig folgen kann.

Die Schlitze 241 sind vorzugsweise in Richtung auf Lochungen 21 zur Verbindung des aus dem Organoblech 2 hergestellten Strukturbauteils 5 mit beispielsweise einer Kraftfahrzeugtür ausgerichtet. Die Aufhängestellen 24 werden anschließend durch Ausspritzen mittels eines Kunststoffs verschlossen, so dass das aus dem Organoblech 2 geformte Strukturbauteil ausschließlich die Lochungen 21, die beispielsweise als Schnittstellen für eine Bajonettverbindung ausgebildet sein können, aufweist.

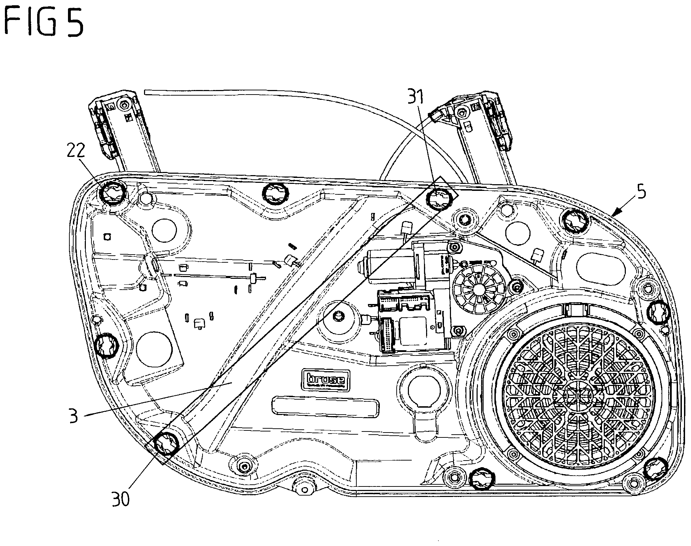

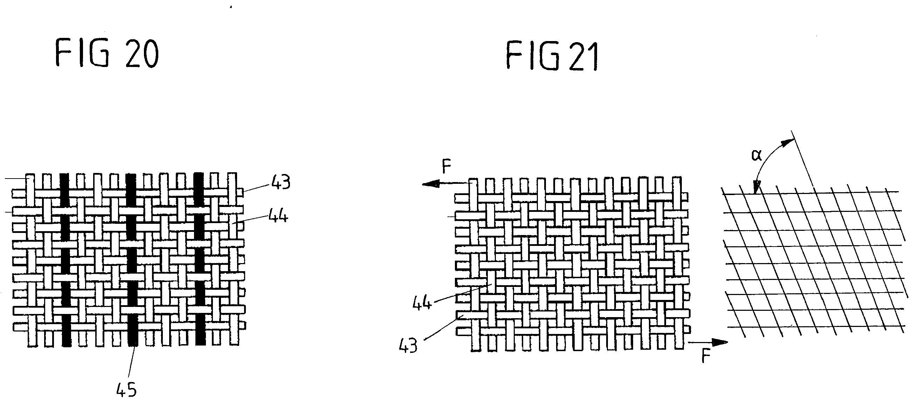

Zur Vorbereitung des Organoblechs auf den späteren Einsatz des aus dem Organoblech hergestellten Strukturbauteils können verschiedene Maßnahmen getroffen werden, die sowohl dem späteren Verwendungszweck als auch der Erhöhung der Stabilität und Belastbarkeit des Strukturbauteils dienen. Beispiele hierfür sind in den nachfolgend beschriebenen Fig. 5 bis 39 dargestellt.

Fig. 5 zeigt eine Draufsicht auf ein als Türmodul oder Aggregateträger 5 ausgebildetes Strukturbauteil, bei dem vor oder während der Warmumformung ein Zugband 3 diagonal in Bezug auf die im Wesentlichen rechteckförmige Grundstruktur des Türmoduls 5 ausgerichtet und an Verbindungsstellen 30, 31 mit dem Organoblech 2 bzw. Türmodul 5 verbunden wurde. Vorzugsweise erfolgt die Verbindung des Zugbandes 3 mit dem Türmodul 5 an Schnittstellen bzw. Durchtrittsöffnungen 22 für eine Bajonettverbindung des Türmoduls 5 mit einem Türinnenblech einer Kraftfahrzeugtür. Dabei sind die Verbindungsstellen 30, 31 in das Türmodul 5 integriert oder das Zugband 3 wird nach der Umformung des Organoblechs 2 zum Türmodul 5 auf das Türmodul 5 aufgesetzt und mit diesem durch Schweißen, Kleben, Nieten oder dergleichen verbunden.

Die Ausrichtung des Zugbandes 3 folgt dabei den auf das Türmodul 5 ausgeübten Zugkräften beim Betätigen beispielsweise eines auf dem Türmodul 5 montierten Fensterhebers oder Zuziehkräften, die von einem Türinnengriff auf das Türmodul 5 ausgeübt werden.

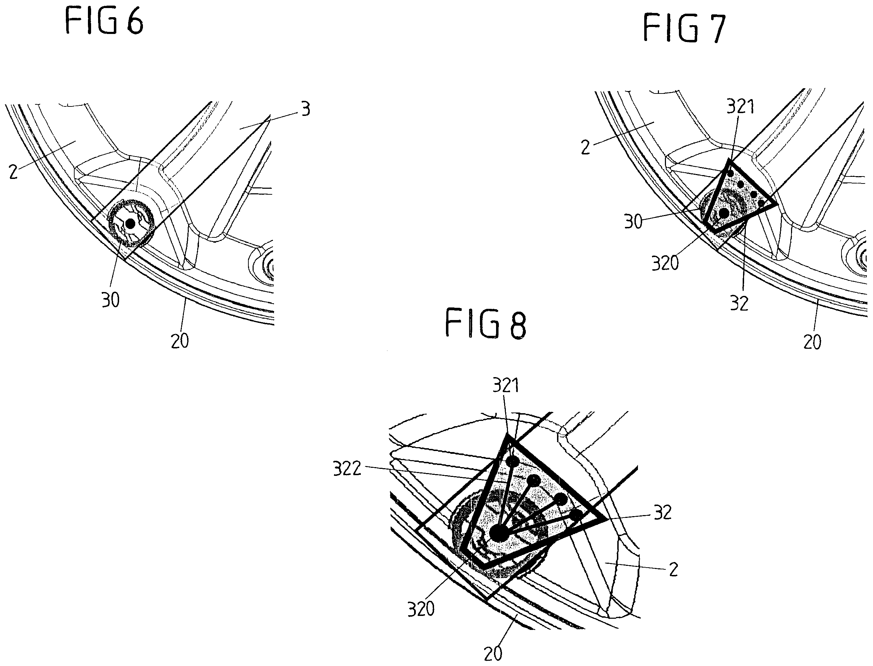

In den Fig. 6 bis 12 sind verschiedene Möglichkeiten der Kraftübertragung eines Zugbandes 3 auf ein Türmodul 5 im Bereich der Verbindungsstellen des Zugbandes 3 mit dem Türmodul 5 dargestellt.

In den Fig. 6 bis 8 sind Ausschnitte des Randbereichs 20 eines Organoblechs 2 in einer schematischen Draufsicht dargestellt, die die Verbindung eines Zugbandes 3 mit dem Organoblech 2 an Verbindungsstellen 30 zeigen, die als Schnittstellen für eine Bajonettverbindung des aus dem Organoblech 2 hergestellten Türmoduls 5 mit einem weiteren Strukturbauteil eines Kraftfahrzeugs, beispielsweise mit einem Türinnenblech einer Kraftfahrzeugtür vorgesehen sind.

Zur Kraftübertragung und Kraftverteilung der auf das Zugband 3 und das aus dem Organoblech 2 hergestellte Strukturbauteil ausgeübten Zugkraft sind Adapter 32 an die Enden des Zugbandes 3 bzw. des Organoblechs 2 angespritzt oder in das Zugband 3 eingeformt, an das Zugband 3 angeklebt oder angenietet. Alternativ werden die Adapter 32 und das Zugband 3 in ein Spritzwerkzeug zur Herstellung des Türmoduls eingelegt und eingespritzt. Die Verbindung der Adapter 32 mit dem Organoblech 2 erfolgt gemäß Fig. 7 an einer Befestigungsstelle 320 mit dem Organoblech 2 und über mehrere verteilt an den dreieckförmigen Adaptern 32 angeordnete Befestigungsstellen 321 mit dem Zugband 3.

Zur weiteren Optimierung der Kraftübertragung zwischen dem Zugband 3 und der Befestigungsstelle 30 des Zugbandes 3 am Organoblech 2 können gemäß Fig. 8 in die Adapter 32 eingelagerte Fasern oder Gewebe 322 vorgesehen werden, die die Befestigungsstelle 320 am Organoblech 2 mit den verteilt angeordneten Befestigungsstellen 321 am Zugband 3 verbinden.

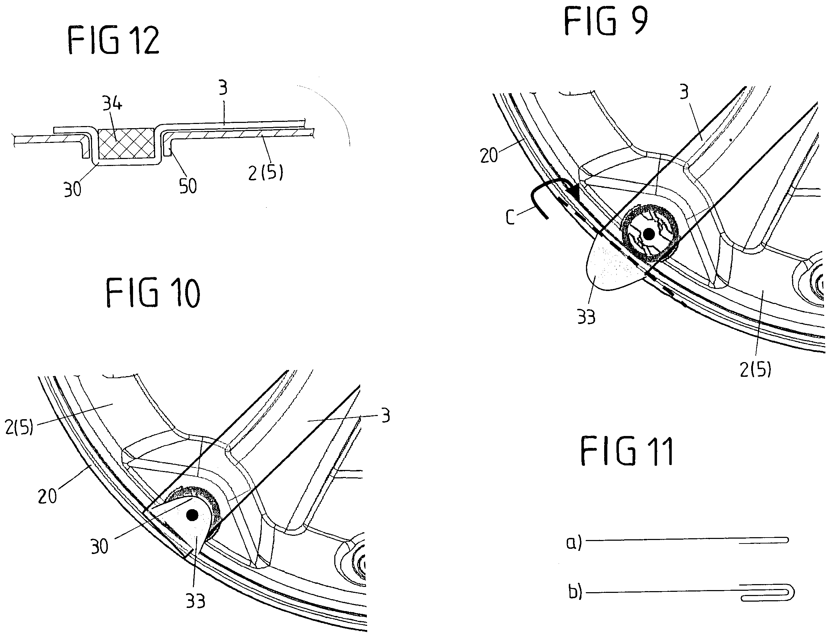

In den Fig. 9 bis 12 ist eine weitere Alternative zur Kraftübertragung zwischen einem aus einem Organoblech 2 hergestellten Strukturbauteil in Form eines Türmoduls 5 und einem Zugband 3 dargestellt, das mit dem Organoblech 2 bzw. Türmodul 5 mit dessen Randbereich 20 verbunden ist. Diese Form der Kraftübertragung besteht gemäß Fig. 9 aus einem über den Randbereich 20 des Organoblechs 2 hinausragenden Überstand 33 des Zugbandes 3, der in Richtung des Pfeiles C gemäß Fig. 9 umgeklappt und in der Position gemäß Fig. 10 mit der Befestigungsstelle 30 des Organoblechs 2 thermisch beispielsweise durch Ultraschweißen oder dergleichen verschmolzen wird. Dadurch erfolgt eine Verstärkung der Verbindung des Zugbandes 3 mit dem Organoblech 2 durch einfache oder mehrfache Materialdoppelung wie in den Fig. 11a und 11b schematisch dargestellt ist.

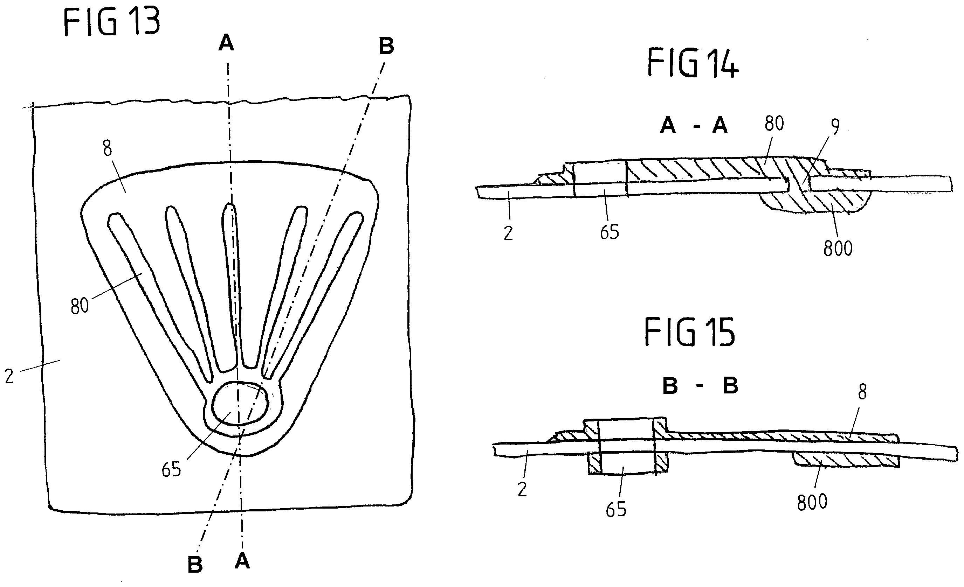

Fig. 12 zeigt in einem schematischen Längsschnitt eine ergänzende Maßnahme zur optimalen Zugkraftübertragung zwischen dem Zugband 3 und dem Organoblech 2 zur Herstellung des beispielsweise als Türmodul oder Aggregateträger 5 ausgebildeten Strukturbauteils durch Einsetzen eines Stabilisierungspfropfens 34 in das Zugband 3, so dass dieses in die Befestigungsstelle 30, die als Durchbruch 50 im Organoblech 2 bzw. Strukturbauteil 5 ausgebildet ist, eingedrückt wird und dadurch eine formschlüssige Verbindung des Zugbandes 3 mit dem Organoblech 2 bzw. Strukturbauteil 5 herstellt.
Eine alternative Ausgestaltung von Adaptern ist in den Figuren 13 - 15 in einer Draufsicht und zwei Schnitten dargestellt.

Fig. 13 zeigt eine Draufsicht auf ein Organoblech 2 mit einem angespritzten Adapter 8 aus einer Kunststoffmatrix, die ausgehend von einer Befestigungsöffnung 65 zum Durchstecken eines Bolzens, einer Schraube oder eines Niets aufgefächert ist und fingerförmig aufgefächerte Rippen 80 aufweist, um mehr Kraftpfade durch Anordnung langfasriger Faserrowings mit dem Organoblech 2 verbinden zu können. Die Struktur der Rippen 80 ist der Draufsicht auf das Organoblech 2 gemäß Fig. 13 und dem in Fig. 14 dargestellten Längsschnitt entlang der Linie A - A gemäß Fig. 13 als Erhebung gegenüber der flächenförmig angespritzten Kunststoffmatrix des Adapters 8 entsprechend dem in Fig. 15 dargestellten Längsschnitt entlang der Linie B - B gemäß Fig. 13 zu entnehmen.

Um die formschlüssige Verbindung zwischen dem Adapter 8 und dem Organoblech 2 herzustellen, wird auf der der Anspritzseite des Adapters 8 gegenüberliegenden Seite des Organoblechs 2 im Spritzwerkzeug eine Durchspritzkavität vorgesehen, die nur durch ein Durchspritzen des Verstärkungselements bzw. Organoblechs 2 im Bereich des Verstärkungselements mit dem Material der Kunststoffmatrix des Adapters 8 befüllbar ist. Dabei wird das Material des Adapters 8 an den dafür vorgesehenen Stellen durch die Struktur des Organoblechs gedrückt, wobei das Organoblech eine für die Durchspritzung ausreichend hohe Temperatur aufweisen muss. Es besteht aber auch die Möglichkeit, Vorlochungen 9 im Bereich der Durchspritzkavität des Organoblechs 2 vorzusehen, um den beabsichtigten Formschluss mit dem Adapter 8 herzustellen.

Fig. 14 zeigt den Durchspritzbereich 800 auf der der Kunststoffmatrix des Adapters 8 gegenüberliegenden Seite des Organoblechs 2. Der Durchspritzbereich 800 dient gleichzeitig zur Prozesskontrolle, da der Grad der Befüllung ein Qualitätsmerkmal für die zu erzeugende Verbindung darstellt, insbesondere dann, wenn das Material des Adapters direkt durch die Struktur des Organoblechs (also ohne Vorlochungen 9) hindurchgespritzt wird. Ist der Bereich 800 voll ausgebildet, so kann die Verbindung als ordnungsgemäß angesehen werden, während eine unvollständige Ausbildung des Durchspritzbereichs 800 als unzureichend qualifiziert werden muss. Grund hierfür können Abweichungen von Soll-Parametern in der Prozessführung sein, z. B. eine zu niedrige Temperatur des Organoblechs.

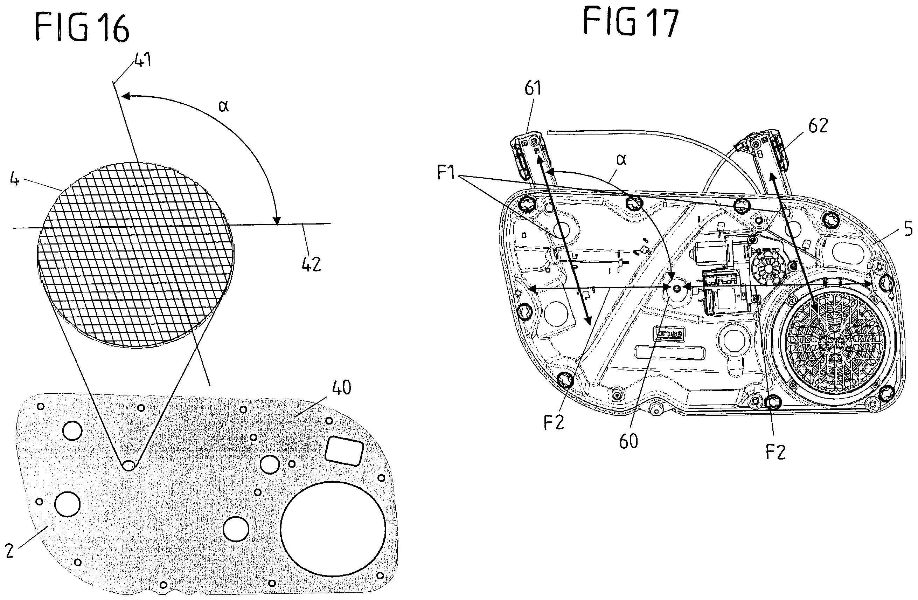

Alternativ oder zusätzlich zu einer Anordnung und Verbindung von zusätzlichen Befestigungsmitteln an einem Organoblech zur Herstellung eines Strukturbauteils für ein Kraftfahrzeug kann eine entsprechende Strukturierung bzw. ein Aufbau des Organoblechs als Halbzeug zur Herstellung eines Strukturbauteils für ein Kraftfahrzeug vorgesehen werden. Beispiele hierfür sind in den Fig. 16 bis 39 für die Herstellung eines Türmoduls 5 für eine Kraftfahrzeugtür aus einem Organoblech 2 dargestellt und werden nachfolgend näher erläutert.

In den Fig. 16 und 17 ist ein Beispiel für eine gezielte Vorbereitung eines Organoblechs 2 für den Einsatz eines als Türmodul 5 ausgebildeten Strukturbauteils dargestellt, bei dem gemäß Fig. 16 die in die Kunststoffmatrix 40 eingelagerten Endlosfasern in Richtung der auf das Türmodul 5 einwirkenden Kräfte ausgerichtet werden.

Fig. 16 zeigt in schematischer Darstellung einen Ausschnitt aus dem Gewebe, Gestricke oder Gelege 4 aus sich kreuzenden Endlosfasern 41, 42, die einen Winkel α von beispielsweise 100° zwischen sich einschließen. Diese Ausrichtung entspricht gemäß Fig. 17 einerseits der durch einen Fensterheber mit Führungsschienen 61, 62 auf das Türmodul 5 ausgeübten und parallel zu den Führungsschienen 61, 62 ausgerichteten Kräften F₁ und andererseits parallel zur Ober- und Unterkante des Türmoduls 5 ausgerichteten Kräften F₂, die von und zu einer Anbindung 60 eines Türzuziehgriffes an das Türmodul 5 gerichtet sind. Die sich im Faserverlauf des Gewebes bzw. Geleges oder Gestrickes 4 der Endlosfasern 41, 42 wiederfindenden Hauptkraftrichtungen F₁ und F₂ bewirken eine optimale Krafteinleitung in das Türmodul 5, so dass die strukturelle Festigkeit des aus einem Organoblech 2 hergestellten Türmoduls 5 der eines Strukturbauteils aus Stahl entspricht, wobei sowohl die Herstellung des Türmoduls 5 aus einem Organoblech vereinfacht als auch dessen Gewicht wesentlich verringert ist.

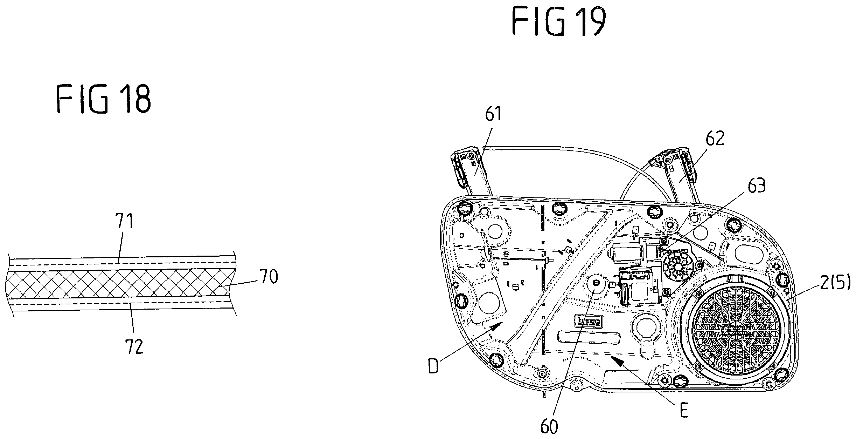

Möglichkeiten zur Formung und Zusammensetzung eines Organoblechs zur Herstellung eines Strukturbauteils in Abhängigkeit von dessen Einsatzbereich und Belastung sind in den Fig. 18 bis 21 dargestellt.

Je nach Belastung und Einsatzbereich des Strukturbauteils können
- unterschiedliche Materialien für die Endlosfasern des Organoblechs,
- unterschiedliche Gewebearten,
- unterschiedliche Formen des Gewebeaufbaus,
- eine unterschiedliche Anzahl von Lagen der Kunststoffmatrix und eingelegten Endlosfasern,
- eine unterschiedliche Dicke der Einzellagen sowie
- ein unterschiedliches Faser-Matrix-Verhältnis
vorgesehen werden, um die Crasheigenschaften und die Steifigkeit des Organoblechs 2 sowie die Drapierbarkeit der Endlosfasern bzw. des Gewebes, Geleges oder Gestrickes in der Kunststoffmatrix des Organoblechs 2 zu optimieren.

Fig. 18 zeigt einen schematischen Querschnitt durch ein Organoblech mit einem Kernbereich 70 und Randbereichen 71, 72, die eine mit Karbonfasern verstärkte Lage zur Erhöhung der Steifigkeit und zum Schutz von Feuchtigkeit des Kernbereichs 70 bilden. Der Kernbereich 70 besteht beispielsweise aus einer Aramid-Lage zur Optimierung des Bruchverhaltens bzw. der Crashsicherheit und kann bedarfsweise auch Naturfasern wie Holz oder Sisal enthalten.

In den Fig. 19 bis 21 ist ein Beispiel für die individuelle Anpassung eines Organoblechs 2 an die Belastung eines aus dem Organoblech 2 durch Warmumformung hergestellten Strukturbauteils 5 dargestellt.

Das Strukturbauteil besteht in diesem Ausführungsbeispiel aus einem Türmodul 5 mit einem auf dem Türmodul 5 montierten Fensterheber mit parallel zueinander verlaufenden Führungsschienen 61, 62, einem Fensterheberantrieb 63 und einer Befestigung 60 für einen Türzuziehgriff. Da das Strukturbauteil 5 sowohl Crashkräfte als auch die von den auf dem Strukturbauteil 5 befestigten Aggregaten ausgeübten Kräfte aufnehmen muss, ist das Organoblech 2 zur Herstellung des Strukturbauteils 5 in zwei Abschnitte D und E unterteilt, die den jeweiligen Beanspruchungen des Strukturbauteils 5 angepasst sind.

Im Abschnitt D ist eine erste Gewebeart in die Grundstoffmatrix eingelegt, die aus zwei sich kreuzenden Endlosfasern 43, 44, 45 besteht, wobei die Endlosfasern 45 der in dieselbe Richtung ausgerichteten Endlosfasern 44, 45 aus einer anderen Gewebeart bestehen als die beiden sich kreuzenden Endlosfasern 43, 44.

Im zweiten Abschnitt E besteht das Organoblech 2 aus in einer Kunststoffmatrix eingelagerten, sich kreuzenden Endlosfasern 43, 44, die durch Einwirken entgegen gesetzt gerichteter Kräfte F in eine Ausrichtung gezogen werden, bei der ein Winkel α von beispielsweise 80° zwischen den beiden sich kreuzenden Endlosfasern 43, 44 hergestellt wird.

Die horizontale Ausrichtung der in die Kunststoffmatrix eingelegten Endlosfasern 43 im Bereich E des Organoblechs 2 dient der Aufnahme von Crashkräften und zur Erhöhung der Basissteifigkeit, während die mit den Endlosfasern 43 in einem Winkel von beispielsweise 80° kreuzenden Endlosfasern 44 an den durch die Ausrichtung der Führungsschienen 61, 62 des Fensterhebers 6 angepassten Abzugswinkel zur Aufnahme von Verstellkräften des Fensterhebers 6 angepasst sind. Bei Bedarf kann eine dritte Lage von Endlosfasern in einem Winkel von beispielsweise 20° zur Aufnahme von Zuziehkräften ausgerichtet werden, die von der Anbindung eines Zuziehgriffs auf das Türmodul 5 ausgeübt werden.

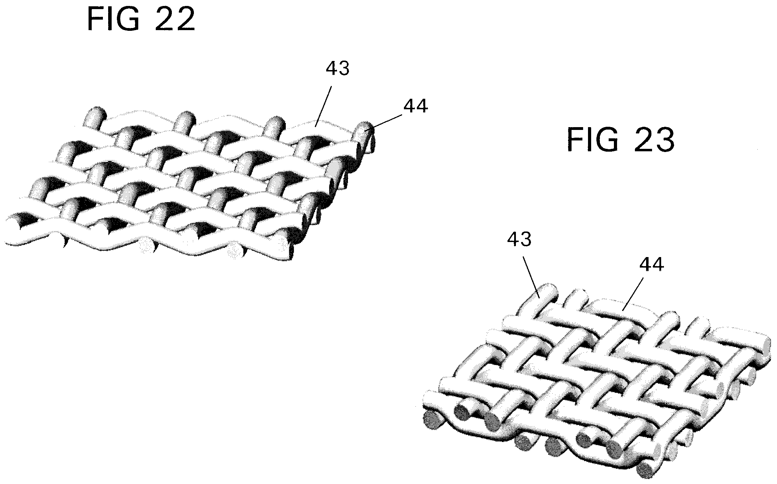

In den Fig. 22 und 23 sind verschiedenen Möglichkeiten der Verknüpfung von gleich- oder andersartigen Endlosfasern 43 und 44 zur Herstellung eines in eine Kunststoffmatrix beispielsweise aus Aramid einzulegenden Gewebes, Gestrickes oder Geleges schematisch-perspektivisch dargestellt.

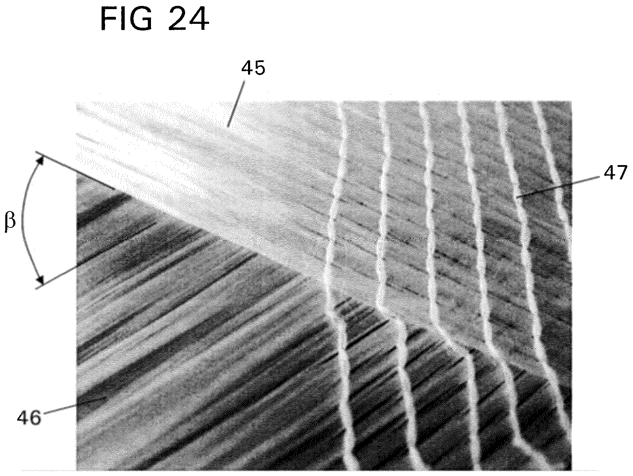

Zur Festlegung der Ausrichtung von Endlosfasern eines Gewebes, Gestrickes oder Geleges zeigt Fig. 24 in einer perspektivischen Darstellung die Ausrichtung zweier sich unter einem Winkel β kreuzenden Endlosfasern 45, 46, die an den Kreuzungspunkten 47 zur Stabilisierung der Lagen sich kreuzender Endlosfasern 45, 46 miteinander vernäht sind.

Da Organobleche mit in einer Kunststoffmatrix eingelagerten Endlosfasern im Unterschied zu reinen Kunststoffmodulen zur Herstellung von Strukturbauteilen für Kraftfahrzeuge eine deutlich geringere Dicke aufweisen, tritt das Problem einer geringeren Dichtheit beispielsweise zur Trennung eines Nassraumes von einem Trockenraum mittels eines aus einem Organoblech hergestellten und in eine Kraftfahrzeugtür eingebauten Türmoduls 5 auf. Insbesondere bei der Warmumformung des Organoblechs können dabei an stärkeren Verformungsstellen Durchgänge auftreten, durch die Feuchtigkeit vom Nassraum zum Trockenraum der Kraftfahrzeugtür durchtreten kann.

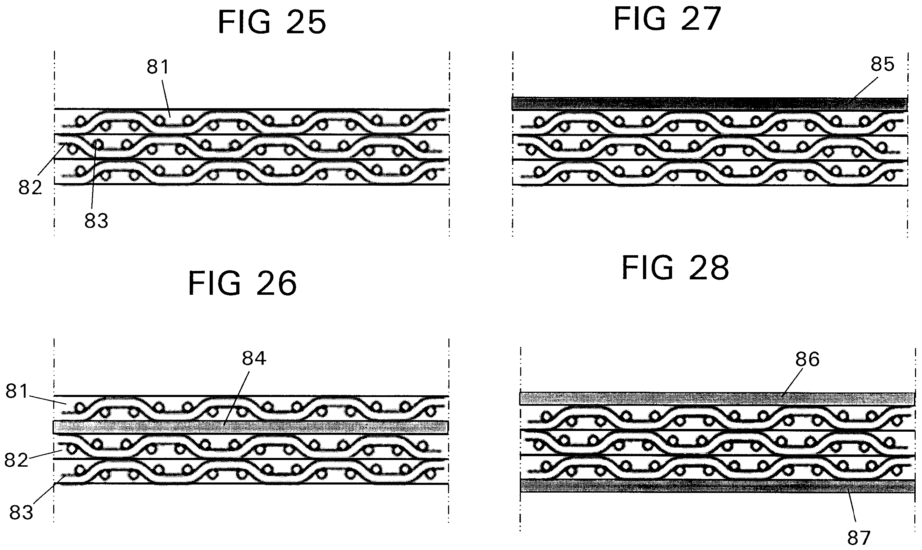

Um dies zu verhindern, können die in den Fig. 25 bis 28 schematisch dargestellten strukturellen Maßnahmen getroffen werden, wobei Fig. 25 in einem Querschnitt durch ein Organoblech drei Lagen 81 bis 83 einer Kunststoffmatrix mit eingelagerten Endlosfasern zeigt. Bei entsprechender Verformung dieses Lagenaufbaus kann es zu entsprechenden Durchbrüchen kommen, die die Funktion des Strukturbauteils beeinträchtigen.

Durch die Anordnung einer zusätzlichen Folienschicht 84 zwischen zwei Lagen des Organoblechs, beispielsweise zwischen die beiden Lagen 81 und 82 gemäß Fig. 26 oder alternativ gemäß Fig. 27 durch die Anordnung einer Folienschicht 85 an einer Oberfläche des Lagenaufbaus bzw. gemäß Fig. 28 mit zwei Folienschichten 86, 87 an beiden Oberflächen des Lagenaufbaus des Organoblechs ist die Dichtheit des Organoblechs gewährleistet. Die zusätzliche Lage 84 bzw. 85 bzw. die zusätzlichen Lagen 86, 87 können aus einer Folie, einem die Kunststoffmatrix beim Umformungsprozess auf- und mitnehmenden Vlies oder aus einem dichtenden Schutzlack bestehen.

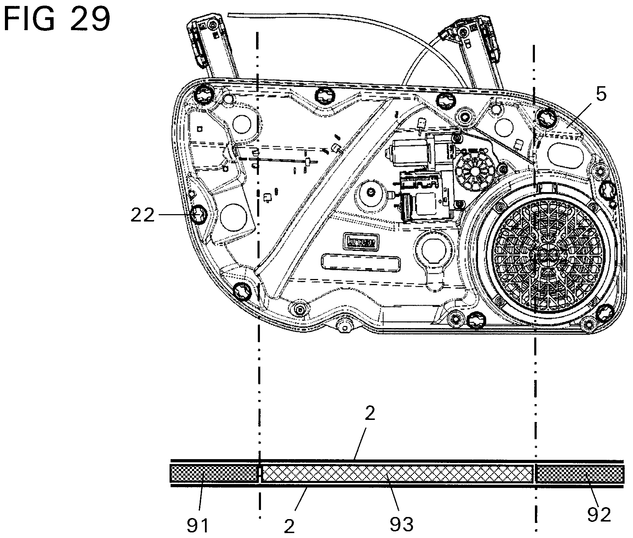

Die Herstellung eines Strukturbauteils aus einem Organoblech schafft die Voraussetzung für eine optimale Anpassung des Strukturbauteils an dessen mechanische oder thermische Belastung durch entsprechende Formgestaltung des Organoblechs sowohl hinsichtlich dessen sandwichsartigen Aufbaus als auch hinsichtlich der einzelnen Zonen eines beispielsweise flächenförmigen Strukturbauteils wie eines Türmoduls oder Aggregateträgers. In den Fig. 29 bis 34 sind verschiedene Ausführungsformen eines Mehrzonen-Sandwichaufbaus eines Organoblechs zur Herstellung eines als Türmodul oder Aggregateträger eingesetzten Strukturbauteils für ein Kraftfahrzeug dargestellt.

Fig. 29 zeigt in einer Draufsicht und in einem Querschnitt die Ausbildung eines aus einem sandwichartigen Organoblech 2 hergestellten Türmoduls 5, das drei Zonen 91, 92, 93 aufweist, von denen beispielsweise die mittlere Zone 93 gut thermisch oder schallisolierend, jedoch nicht druckstabil ausgebildet ist, während die beiden äußeren Zonen 91, 92 eine hohe Druckfestigkeit zum Anschrauben des Türmoduls 5 an ein Türinnenblech zur Aufnahme der durch Verbindungselemente an den Durchtrittsöffnungen 22 ausgeübten Kräfte aufweisen.

Der Sandwichaufbau des Organoblechs 2 unterscheidet sich in der Art des Kernmaterials, den Kerndicken und der Anzahl der verschiedenen Zonen entsprechend der Belastung des aus dem Organoblech 2 hergestellten Strukturbauteils 5. Dadurch ist eine optimale Anpassung an Anforderungen zur Druckfestigkeit oder zum Isolationsverhalten des aus dem Organoblech 2 hergestellten Strukturbauteils 5 gewährleistet, um die Crasheigenschaften, die Steifigkeit und die Drapierbarkeit des Strukturbauteils 5 zu optimieren.

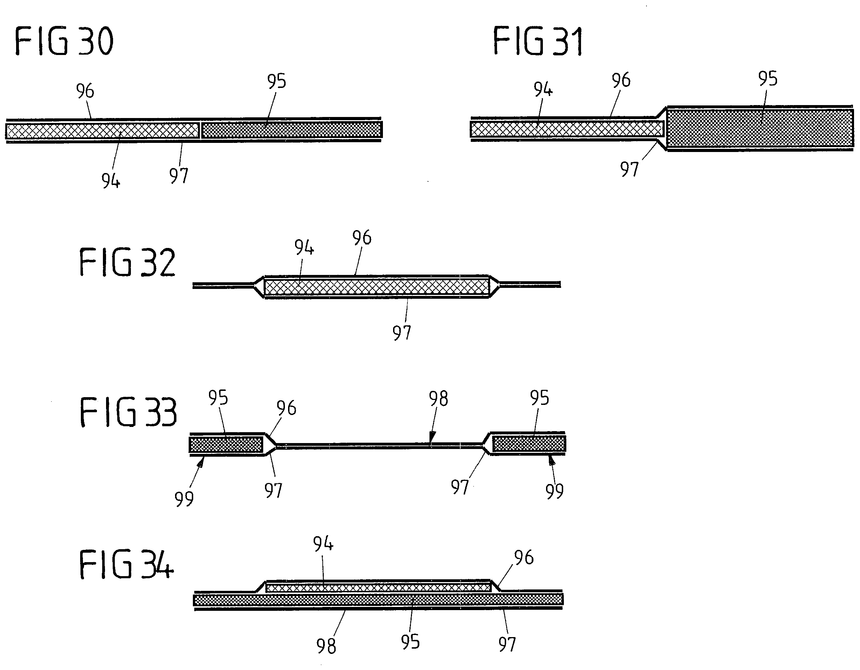

Die in die Wabenstruktur des Mehrzonen-Sandwichs integrierten Einlagen werden an die jeweiligen Anforderungen optimiert angepasst und erfüllen insbesondere die Forderung an ein minimales Gewicht des Organoblechs 2 sowie an die jeweilige mechanische oder thermische Belastung durch den Einsatz von Kunststoffschäumen oder einem Wabenstrukturmaterial. Verschiedene Beispiele hierzu sind in den Fig. 30 bis 34 dargestellt.

Fig. 30 zeigt zwei zwischen Außenlagen 96, 97 nebeneinander angeordnete Kernbereiche 94, 95 mit einem gut thermisch oder schallisolierenden Bereich einerseits und einem Bereich hoher Druckfestigkeit zur Aufnahme der Kräfte durch ein Verbindungselement andererseits.

Fig. 31 zeigt dieselbe Anordnung wie in Fig. 30 mit einem verdickten Bereich einer Lage 95 mit hoher Druckfestigkeit für einen Anschraubbereich.

Gemäß Fig. 32 kann beidseitig eines Kernbereichs 94 ein Befestigungsbereich vorgesehen sein, der durch zwei aufeinanderliegenden Außenlagen 96, 97 geprägt ist, während der Kernbereich 94 je nach Anforderung eine thermisch oder schallisolierend gut isolierende Schicht enthält. Dabei kann der Kernbereich 94 auch sehr schmal ausgebildet sein, wenn beispielsweise nur eine lokale Unterstützung notwendig ist, wie sie bei einem Zuziehgriff oder als Ersatz für eine Verprägung erforderlich ist.

Fig. 33 zeigt in einem schematischen Querschnitt die alternative Ausbildung, bei der ein Kernbereich 98 aus miteinander verbundenen Außenlagen 96, 97 und Randbereiche 99 aus einem Kernbereich 95 mit einer Lage zur Erhöhung der Druckfestigkeit und beidseitig des Kernbereichs 95 angeordneten Außenlagen 96, 97 besteht. Die Randbereiche 99 weisen in dieser Anordnung eine hohe Randsteifigkeit auf, um Dichtkräfte gut abstützen zu können.

In Fig. 34 ist in einem schematischen Querschnitt eine Variante mit einem durchgehenden Kernbereich 98 hoher Steifigkeit 95 und einem Teilbereich 94 hoher Zugfestigkeit und Isolationsvermögens dargestellt, wodurch ein Kompromiss aus verschiedenen Anforderungen in Bezug auf Steifigkeit, Zugfestigkeit und Isolationsvermögen geschaffen wird.

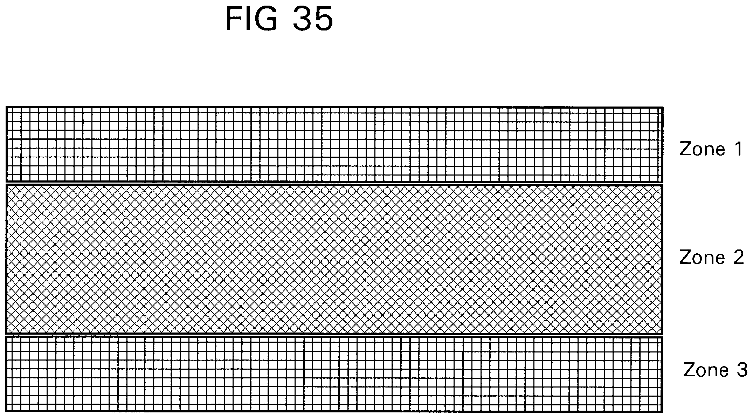

Neben einer Aufteilung eines Organoblechs zur Herstellung eines Strukturbauteils für Kraftfahrzeuge in nebeneinander liegende Zonen bzw. Bereiche des plattenförmigen Organoblechs kann eine Querschnittsschichtung eines Organoblechs in mehrere Zonen vorgesehen werden. Ein Beispiel hierfür ist in Fig. 35 dargestellt und zeigt drei Zonen, die unterschiedliche oder paarweise gemeinsame Materialeigenschaften aufweisen können. Beispielsweise kann die Zone 2 aus einem thermisch oder akustisch gut isolierenden Material bestehen, während die äußeren Zonen 1 und 3 als Zonen hoher Druckfestigkeit ausgebildet sind.

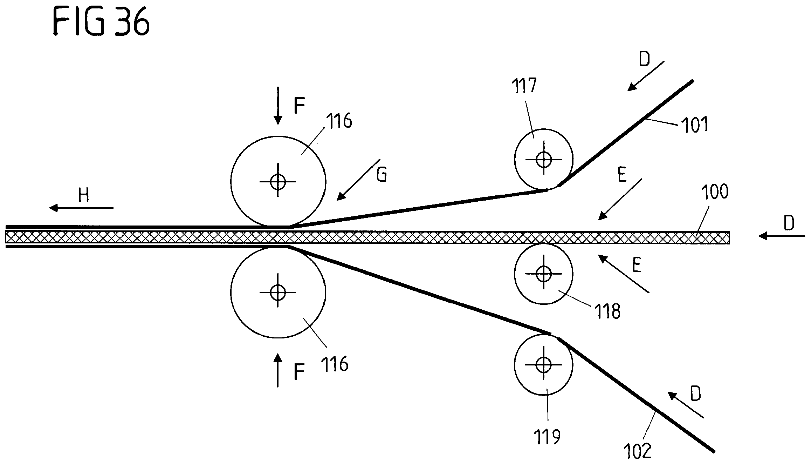

Die Herstellung eines aus verschiedenen Schichten zusammengesetzten Organoblechs ist in Fig. 36 schematisch dargestellt und weist drei Transportrollen 117, 118, 119 zur Zufuhr eines Kernbereichs 100 und zweier den Kernbereich 100 abdeckender Gewebe oder Gelege 101, 102 in Richtung der Pfeile D auf. Gegebenenfalls unter Zugabe eines Klebstoffs oder einer Kunststoffmatrix E und/oder Wärmezufuhr G werden die Gewebe oder Gelege 101, 102 an Walzen 116 mit einer auf die Gewebe oder Gelege 101, 102 einwirkenden Kraft mit dem Kernbereich 100 verbunden und als Organoblech in Richtung des Pfeiles H abgegeben.

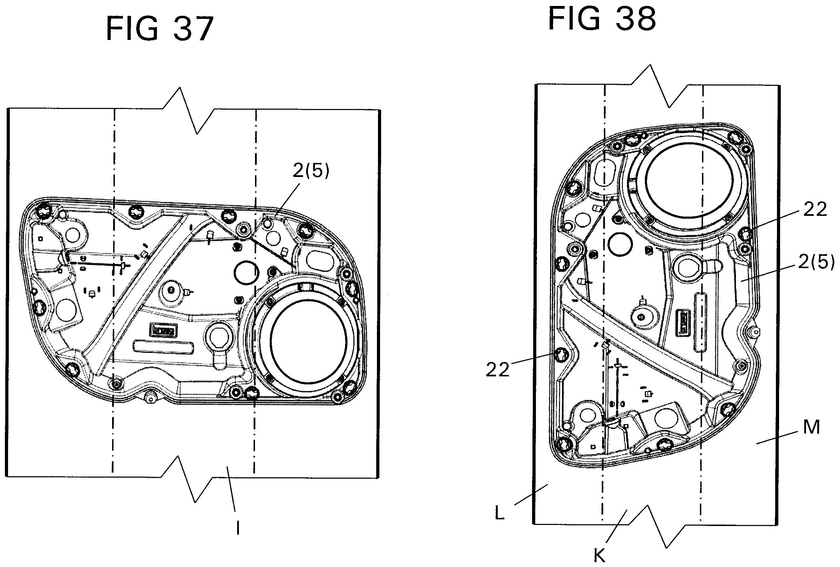

Weitere Beispiele für die Herstellung von Organoblechen mit unterschiedlichen Zonen sind in den Fig. 37 bis 39 anhand eines als Türmodul ausgebildeten Strukturbauteils dargestellt.

Gemäß Fig. 37 weist das Organoblech 2 drei Zonen auf, von denen die mittlere Zone I einen Bereich mit hohem Widerstandsmoment ausbildet, so dass ein auf dem Strukturbauteil montierter Fensterheber mit entsprechenden Abzugskräften nicht zu einer Verformung des aus dem Organoblech 2 hergestellten Strukturbauteils führt.

Fig. 38 zeigt ebenfalls eine Aufteilung eines Organoblechs 2 zur Herstellung eines Türmoduls als Strukturbauteil 5 mit einer Aufteilung in drei längs gerichtete Zonen K, L, M, von denen die mittlere Zone K eine hohe Zugfestigkeit aufweist, so dass beim Zuziehen einer Kraftfahrzeugtür auftretende Zugkräfte vom Türmodul 5 aufgenommen werden, ohne dass zu dessen Verformung kommt. Die jeweils obere und untere bzw. in der Darstellung der Fig. 38 rechte und linke Zone L, M des Organoblechs 2 zur Herstellung eines Türmoduls 5 zeichnen sich durch eine hohe Druckbelastbarkeit aus, so dass das am Türinnenblech einer Kraftfahrzeugtür befestigte Türmodul 5 eine hohe Festigkeit an den Durchtrittsöffnungen bzw. Anschraubpunkten 22 des Türmoduls 5 am Türinnenblech aufweist.

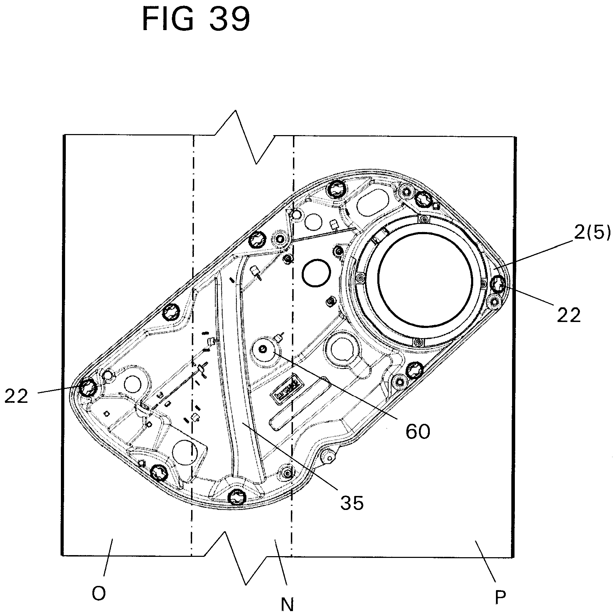

Fig. 39 zeigt eine Ausrichtung von drei unterschiedlichen Zonen N, O, P an einem Organoblech 2 zur Herstellung eines Türmoduls 5 für eine Kraftfahrzeugtür, bei dem die mittlere Zone N aus einem Bereich mit hohem Widerstandsmoment besteht, so dass ggf. ein an der Struktur des Organoblechs 2 vorgesehener Verstärkungssteg 35 entfallen kann. Das hohe Widerstandsmoment der mittleren Zone N ist geeignet, auch die von einer Anschraubstelle 60 für einen Türzuziehgriff ausgeübten Zugkräfte aufzunehmen, ohne dass es zu einer Verformung des aus dem Organoblech 2 hergestellten Türmoduls 5 kommt. Die rechte und linke Zone O, P des Organoblechs 2 zur Herstellung eines Türmoduls 5 zeichnen sich wiederum durch eine hohe Druckbelastbarkeit zum Erzielen einer hohen Festigkeit an Anschraubpunkten 22 des Türmoduls 5 am Türinnenblech aus.

### Bezugszeichenliste

- 1: Anlage zur Warmumformung von Organoblechen
- 2: Organoblech
- 3: Zugband
- 4: Gewebe, Gestricke oder Gelege
- 5: Strukturbauteil (Türmodul oder Aggregateträger)
- 8: Verstärkungselement (Adapter)
- 9: Vorlochung
- 10: Magazin
- 11: Roboter mit Greifer
- 12: Bearbeitungseinheit
- 13: Strahlereinheit (Infrarot- oder Heizstrahler)
- 14: Spritzgießmaschine
- 20: Außenrand bzw. zur Kontur des Organoblechs/Strukturbauteils
- 21: Lochungen
- 22: Schnittstellen oder Durchtrittsöffnungen (Bajonettverbindungen)
- 23: Überstände
- 24: Aufhängestellen (Schlüssellochöffnungen)
- 30, 31: Verbindungsstellen
- 32: Adapter
- 33: Überstand
- 34: Stabilisierungspfropfen
- 40: Kunststoffmatrix
- 41, 42: Endlosfasern
- 43 - 46: sich kreuzende Endlosfasern
- 47: Kreuzungspunkte
- 50: Durchbruch
- 60: Befestigung für einen Türzuziehgriff
- 61, 62: Führungsschienen
- 63: Fensterheberantrieb
- 65: Befestigungsöffnung
- 70: Kernbereich
- 71, 72: Randbereiche
- 80: fingerförmig aufgefächerte Rippen
- 81 - 83: Lagen einer Kunststoffmatrix mit eingelagerten Endlosfasern
- 84 - 87: Folien, Vlies oder dichtender Schutzlack
- 91 - 93: Zonen unterschiedlicher Eigenschaften
- 94, 95: Kernbereiche
- 96, 97: Außenlagen
- 98: Kernbereich
- 99: Randbereich
- 100: Kernbereich
- 101, 102: Gewebe oder Gelege
- 116: Walzen
- 117-119: Transportrollen
- 240: Öffnungen
- 241: Schlitze
- 320, 321: Befestigungsstellen
- 322: Fasern oder Gewebe
- 800: Durchspritzbereich
- A: Bewegungsrichtungen des Roboter-Greifers
- B: Bewegungsrichtungen der verschiebbaren Strahlereinheit
- C: Umklapprichtung
- D: Abdeckrichtung
- E: Klebstoffs oder Kunststoffmatrix
- F, F₁, F₂: Kräfte
- I - P: Zonen unterschiedlicher Materialeigenschaften
- α, β: Winkel zwischen sich kreuzenden Endlosfasern

## Patentansprüche

1. Verfahren zur Herstellung eines als Türinnenhaut, Türmodul- oder Aggregateträger einer Kraftfahrzeugtür ausgebildeten Strukturbauteils durch Warmumformung eines mehrlagig aufgebauten Organoblechs (2),
**dadurch gekennzeichnet,**
**dass** einer erhöhten Belastung ausgesetzte Abschnitte (21, 22) des aus dem Organoblech (2) hergestellten Strukturbauteils (5) stärker strukturiert werden, indem in thermoplastischen Kunststoff (40) des Organoblechs (2) eingelagerte Endlosfasern oder Endlosfaserlagen (41 - 46) in Belastungsrichtung eines auf dem Strukturbauteil (5) montierten Funktionselements (6) der Kraftfahrzeugtür ausgerichtet werden, und zwar derart, dass
- die Endlosfasern oder Endlosfaserlagen in Abzugsrichtung einer Fensterscheibe eines Fensterhebers der Kraftfahrzeugtür ausgerichtet sind und/oder
- die Endlosfasern oder Endlosfaserlagen in Richtung der Zugverbindung zwischen einem Türschloss und einem Türscharnier der Kraftfahrzeugtür ausgerichtet sind und/oder
- die Endlosfasern oder Endlosfaserlagen in Belastungsrichtung eines Türzuziehgriffes der Kraftfahrzeugtür ausgerichtet sind,
wobei zusätzlich zwischen zwei Endlosfasern oder Endlosfaserlagen aufweisenden Lagen (81 - 83) des Organoblechs (2) eine Dichtungsschicht (84 - 87) aus einer Folie angeordnet ist, um a) bei Ausprägung der räumlichen Struktur des Strukturbauteils zu verhindern, dass sich Löcher bilden und die Struktur des Strukturbauteils undicht wird, und um b) bei der Warmumformung des mehrlagigen Organoblechs zu verhindern, dass an Verformungsstellen des Organoblechs (2) Durchgänge auftreten, durch die Feuchtigkeit von einem Nassraum zu einem Trockenraum der Kraftfahrzeugtür durchtreten kann.

2. Verfahren nach Anspruch 1, **dadurch gekennzeichnet, dass** zusätzliche Aufnahmestellen im Organoblech (2) vorgesehen werden, die nach der Warmumformung des Organoblechs (2) geschlossen werden.

3. Verfahren nach Anspruch 2, **dadurch gekennzeichnet, dass** den Aufnahmestellen definierte, als Schlitze oder Materialverdünnung ausgebildete Schwächungsbereiche im Organoblech (2) als Fließ-, Gleit- oder Deformationsbereiche zugeordnet werden, die nach der Warmumformung des Organoblechs (2) mit einem Kunststoff verstärkt oder verschlossen werden.

4. Verfahren nach einem der Ansprüche 1 bis 3, **dadurch gekennzeichnet, dass** mindestens zwei sich kreuzende Endlosfaserlagen (41 - 46) vorgesehen und in den Kreuzungspunkten (47) fixiert werden.

5. Verfahren nach einem vorhergehenden Ansprüchen, **dadurch gekennzeichnet, dass** äußere Lagen (71, 72) des Organoblechs (2) aus mit Karbonfasern verstärktem thermoplastischem Kunststoff mit einer Zwischenlage (70) aus Aramid oder einer Mischung aus Aramid mit Naturfasern verbunden werden.

## Claims

1. A method for manufacturing a structural component formed as door inner skin, door module carrier or assembly carrier of a motor vehicle door by hot forming of a multilayer organo-sheet (2),
**characterized in**
**that** portions (21, 22) of the structural component (5) manufactured from the organo-sheet (2) which are exposed to an increased load, are structured more strongly by orientation the continuous fibers or continuous fiber layers (41 - 46) embedded in the thermoplastic material (40) in loading direction of a functional element (6) of the motor vehicle door mounted on the structural component (5), such that
- the continuous fibers or continuous fiber layers are oriented in pull-off direction of a window pane of a window lifter of the motor vehicle door, and / or
- the continuous fibers or continuous fiber layers are oriented in direction of the pull connection between a door lock and a door hinge of the motor vehicle door, and / or
- the continuous fibers or continuous fiber layers are oriented in loading direction of a door closing handle of the motor vehicle door,
wherein in addition at least one sealing layer (84 - 87) which consists of a film is arranged between two layers (81 - 83) of the organo-sheet (2) which have continuous fibers or continuous fiber layers, in order to a) prevent during the formation of the spatial structure, that holes are formed and the structure becomes untight, and to b) prevent by the hot forming of the multilayer organo-sheet that passageways occur at points of deformation of the organo-sheet (2), through which moisture can pass from the wet space to the dry space of the motor vehicle door.

2. The method according to claim 1, **characterized in that** additional receiving points are provided in the organo-sheet (2), which are closed after hot forming of the organo-sheet (2).

3. The method according to claim 2, **characterized in that** to the receiving points defined weakened regions formed as slots or material thinning in the organo-sheet (2) are associated as yielding, sliding or deformation regions, which after hot forming of the organo-sheet (2) are reinforced or closed with a plastic material.

4. The method according to one of the claims 1 to 3, **characterized in that** at least two intersecting continuous fiber layers (41 - 46) are provided and fixed at the intersection points.

5. The method according to at least one of the preceding claims, **characterized in that** outer layers (71, 72) of the organo-sheet (2) of a thermoplastic material reinforced with carbon fibers are connected with an intermediate layer (70) of aramide or a mixture of aramide with natural fibers.

## Revendications

1. Procédé de fabrication d'un composant structurel réalisé en tant que revêtement intérieur de portière, support de module de portière ou support de groupe d'une portière de véhicule automobile par façonnage à chaud d'une tôle organique (2) élaborée à partir de plusieurs couches,
**caractérisé en ce**
**que** des sections (21, 22), exposées à une contrainte élevée, du composant structurel (5) fabriqué à partir de la tôle organique (2) sont plus fortement structurées **en ce que** des fibres sans fin ou des couches de fibres sans fin (41 - 46) incorporées dans la matière synthétique (40) thermoplastique de la tôle organique (2) sont orientées dans la direction de contrainte d'un élément fonctionnel (6), monté sur le composant structurel (5), de la portière de véhicule automobile, et ce de telle manière que
- les fibres sans fin ou les couches de fibres sans fin sont orientées dans une direction de retrait d'une vitre d'un lève-vitre de la portière de véhicule automobile, et/ou
- les fibres sans fin ou les couches de fibres sans fin sont orientées en direction de la liaison par traction entre une serrure de portière et une charnière de portière de la portière de véhicule automobile, et/ou
- les fibres sans fin ou les couches de fibres sans fin sont orientées dans une direction de contrainte d'une poignée de fermeture de portière de la portière de véhicule automobile,
dans lequel une couche d'étanchéité (84 - 87) composée d'un film est disposée en supplément entre deux couches (81 - 83), présentant des fibres sans fin ou des couches de fibres sans fin, de la tôle organique (2) pour a) empêcher lors de l'estampage de la structure spatiale du composant structurel qu'il ne se forme des trous et que la structure du composant structurel ne devienne non étanche et pour b) empêcher lors du façonnage à chaud de la tôle organique multicouche que ne se forment en des emplacements de déformation de la tôle organique (2) des passages, par lesquels de l'humidité peut passer d'un espace humide à un espace sec de la portière de véhicule automobile.

2. Procédé selon la revendication 1, **caractérisé en ce que** des emplacements de logement supplémentaires sont prévus dans la tôle organique (2), qui sont fermés après le façonnage à chaud de la tôle organique (2).

3. Procédé selon la revendication 2, **caractérisé en ce que** des zones d'affaiblissement définies réalisées en tant qu'entailles ou qu'amincissement de matériau dans la tôle organique (2) sont associées aux emplacements de logement en tant que zones d'écoulement, de glissement ou de déformation, qui sont renforcées ou fermées après le façonnage à chaud de la tôle organique (2) avec une matière synthétique.

4. Procédé selon l'une quelconque des revendications 1 à 3, **caractérisé en ce qu'**au moins deux couches de fibres sans fin (41 - 46) se croisant sont prévues et sont fixées dans les points d'intersection (47).

5. Procédé selon l'une quelconque des revendications précédentes, **caractérisé en ce que** des couches extérieures (71, 72) de la tôle organique (2) composées d'une matière synthétique thermoplastique renforcée par des fibres de carbone sont reliées à une couche intermédiaire (70) composée d'aramide ou d'un mélange composé d'aramide et de fibres naturelles.
